# DEMANDE DE BREVET EUROPEEN

(11) **EP 4 692 770 A1**
(43) Date de publication de la demande: **11.02.2026**
(21) Numéro de dépôt: 25193361.0
(22) Date de dépôt: 01.08.2025
(51) Int. Cl.: G01N 21/78, G01N 31/22

(54) **DISPOSITIF DE DÉTECTION COLORIMÉTRIQUE SE PRESENTANT SOUS LA FORME D'UNE MOUSSE POUR LA DÉTECTION DE COMPOSÉS CHIMIQUES**

(30) Priorité: 07.08.2024 FR 2408765
(71) Demandeur: Commissariat à l'Energie Atomique et aux Energies Alternatives, 75015 Paris (FR)
(72) Inventeur: LEPEYTRE, Célia, 30650 ROCHEFORT DU GARD (FR); FREMY, Virginie, 30126 SAINT LAURENT DES ARBRES (FR); FAURE, Sylvain, 84210 VENASQUE (FR); PENLOU, Sébastien, 38950 38950 SAINT MARTIN LE VINOUX (FR); LAURENT, Manon, 84410 BEDOIN (FR)
(74) Mandataire: Santarelli

(57) **Abrégé**

L'invention se rapporte à un dispositif de détection colorimétrique pour détecter la présence d'au moins un composé chimique (3), qui se présente sous la forme d'une mousse (5) et qui consiste en une dispersion de bulles gazeuses dans une solution aqueuse moussante comprenant un ou plusieurs indicateurs colorés différents, caractérisé en ce que l'indicateur coloré ou chacun des indicateurs colorés est encapsulé dans des particules solides, et en ce que chaque particule solide ne comprend qu'un seul indicateur coloré lorsque la solution aqueuse moussante comprend plusieurs indicateurs colorés.

L'invention se rapporte également à un procédé de préparation du dispositif tel que précédemment décrit.

Elle se rapporte aussi à un procédé de détection de la présence d'au moins un composé chimique en mettant en œuvre ledit dispositif.

Applications : détection colorimétrique de composés chimiques, de composés toxiques de guerre ou de composés toxiques industriels chimiques.

## Description

### DOMAINE TECHNIQUE

L'invention se rapporte au domaine de la détection colorimétrique de composés chimiques.

Plus spécifiquement, l'invention se rapporte à un dispositif de détection colorimétrique, se présentant sous la forme d'une mousse, pour détecter la présence de composés chimiques.

Elle se rapporte aussi à un procédé de préparation d'un tel dispositif ainsi qu'à un procédé de détection de la présence de composés chimiques susceptibles d'être présents sur une surface, en mettant en œuvre ledit dispositif.

La présente invention peut trouver application pour la détection de composés toxiques, tels que des composés toxiques de guerre ou des composés toxiques industriels chimiques (connus sous l'abréviation TIC).

### ÉTAT DE LA TECHNIQUE ANTÉRIEURE

Il est connu que certains composés organophosphorés présentent une toxicité avérée pour l'organisme humain. En effet, ces composés peuvent être impliqués dans le mécanisme d'inhibition des sérines protéases et, en particulier, de l'acétylcholinestérase, qui intervient dans les jonctions synaptiques et dont le dérèglement de l'activité peut empêcher le relâchement musculaire et ainsi provoquer la mort par asphyxie.

Ces composés sont notamment utilisés dans la formulation de certains pesticides ou encore d'agents chimiques de guerre (comme les composés organophosphorés de la série G ou de la série V).

Or, du fait de la létalité élevée de ces composés et de leur prolifération, il s'avère important de pouvoir disposer de systèmes ou dispositifs permettant leur détection.

Il a alors été proposé des systèmes pour détecter ces composés toxiques susceptibles d'être présents sur une surface, qui consistent soit à éroder ladite surface puis à analyser le résidu soit à appliquer un traitement thermique à ladite surface pour engendrer l'évaporation des composés toxiques puis à analyser les gaz ainsi émis.

Il existe également un système, appelé « *Système portatif de prélèvement de produits persistants par évaporation* » (ou S4PE), qui combine l'érosion et le traitement thermique de la surface susceptible d'être contaminée par un ou des composés toxiques et qui permet l'évaporation de ces composés, lesquels sont ensuite détectés par un appareil, appelé « *Appareil portatif de contrôle de la contamination* » (AP2C).

Cependant, avec de tels systèmes il est nécessaire de sonder l'intégralité de la surface pour localiser les points de contamination, ce qui augmente la durée de l'opération et la durée d'exposition des opérateurs aux composés toxiques.

Il a également été proposé dans le brevet EP 2 069 522-B1 (ci-après référence **[1]),** l'utilisation d'une solution aqueuse pour détecter la présence de composés toxiques, tels que des composés organophosphorés, susceptibles d'être présents sur une surface. La solution aqueuse dans la référence **[1]** est appliquée (ou pulvérisée) sur ladite surface *via* un spray. Elle comprend une ou plusieurs enzymes et au moins un composé indicateur qui peut être un indicateur coloré.

La détection d'un composé toxique est basée, dans la référence **[1],** sur une réaction enzymatique puisque, par exemple, lorsque la solution aqueuse est pulvérisée sur la surface et que celle-ci est contaminée par un composé toxique, alors l'enzyme ou les enzymes présentes dans la solution aqueuse réagissent avec le composé toxique, provoquant alors un changement de pH de cette solution et, par conséquence, un changement de couleur de l'indicateur coloré et donc un changement de couleur de la solution aqueuse.

Cependant, l'utilisation de la solution aqueuse telle que décrite dans la référence **[1]** ne permet pas une détection précise et localisée des points de contamination des composés toxiques et ne permet pas, non plus, la discrimination de ces composés.

Par ailleurs, une telle utilisation ne permet pas un contact prolongé entre la solution aqueuse et le(s) composé(s) toxique(s) et, ce, d'autant plus lorsque la surface susceptible d'être contaminée est une surface verticale (comme un mur).

De plus, lorsque plusieurs indicateurs colorés sont utilisés dans une telle solution aqueuse, ils sont susceptibles d'interagir entre eux, ce qui n'est pas souhaitable dans le cadre de la détection colorimétrique de composés chimiques.

Au vu de ce qui précède, les inventeurs se sont fixé pour but de fournir de nouveaux dispositifs ne présentant pas les inconvénients précités et permettant une détection et, le cas échéant, une discrimination précises et rapides de composés chimiques toxiques susceptibles d'être présents sur tout type de surface.

### EXPOSÉ DE L'INVENTION

Cet objectif est atteint par l'invention qui propose, en premier lieu, un dispositif de détection colorimétrique pour détecter la présence d'au moins un composé chimique, qui se présente sous la forme d'une mousse et qui consiste en une dispersion de bulles gazeuses dans une solution aqueuse moussante comprenant un ou plusieurs indicateurs colorés différents, et qui est caractérisé en ce que l'indicateur coloré ou chacun des indicateurs colorés est encapsulé dans des particules solides, et en ce que chaque particule solide ne comprend (ou n'encapsule) qu'un indicateur coloré lorsque la solution aqueuse moussante comprend plusieurs indicateurs colorés.

Dans ce qui précède et ce qui suit, on précise que l'on entend par « *mousse »,* un système biphasique comprenant une phase gazeuse (i.e. la dispersion de bulle gazeuses) et une phase liquide (i.e. la solution aqueuse moussante). Une telle mousse est typiquement appelée *« mousse liquide ».*

Par ailleurs, on entend par « *indicateur coloré* », une substance qui prend au moins une couleur caractéristique en présence d'un composé chimique soit, en d'autres termes, une substance qui présente au moins deux états colorés : un état coloré existant lorsque la substance n'est pas en présence du composé chimique à détecter et au moins un autre état coloré lorsque la substance est en présence du composé chimique à détecter. On dit alors que l'indicateur coloré présente un virage colorimétrique.

De plus, l'expression *« indicateurs colorés différents »,* signifie que chaque indicateur coloré réagit à au moins un composé chimique spécifique différent.

Le fait que chacun de ces indicateurs colorés soit encapsulé dans des particules solides permet de limiter, voire d'éviter, la migration de ces indicateurs dans la solution aqueuse moussante et, par conséquence, toute interaction entre ceux-ci.

Aussi, dans le cadre de la présente invention, il est possible de détecter et de discriminer différents composés chimiques.

Conformément à l'invention, lesdites particules solides sont typiquement en un (co)polymère, réticulé ou non.

On précise que par « *(co)polymère »* on entend aussi bien un homopolymère qui est issu d'un seul monomère et qui est donc formé d'un seul motif répétitif, qu'un copolymère qui est issu de plusieurs (c'est-à-dire, deux ou plus de deux) monomères différents et qui est donc formé de plusieurs motifs répétitifs différents.

De telles particules peuvent être obtenues par (co)polymérisation d'un ou plusieurs monomères - cette (co)polymérisation pouvant alors être une (co)polymérisation en masse, en solution, en suspension, en dispersion ou en émulsion, induite par la chaleur ou des UV, en présence ou non d'un amorceur de polymérisation - ou bien par solubilisation/précipitation d'un ou plusieurs (co)polymères dans un solvant approprié.

Dans le cas où les particules solides sont en un (co)polymère réticulé, alors cette réticulation peut résulter :
- d'une fonctionnalisation du ou des monomères préalablement à la (co)polymérisation, auquel cas la (co)polymérisation s'accompagne d'une réticulation ;
- d'une fonctionnalisation du ou des monomères après la (co)polymérisation, auquel cas la (co)polymérisation et la réticulation sont réalisées en deux temps ; ou
- dans le cas d'un copolymère, d'une copolymérisation d'un ou plusieurs monomères monofonctionnels et d'un ou plusieurs monomères plurifonctionnels.

La réticulation permet de limiter au mieux la migration du ou des indicateurs colorés dans la solution aqueuse moussante.

Avantageusement, le ou les monomères sont choisis parmi les monomères acrylates comme, par exemple, le méthacrylate de méthyle, le triacrylate de triméthylolpropane, le pentaacrylate de dipentaérythritol et l'hexaacrylate de dipentaérythritol.

De préférence, le (co)polymère est un poly(méthacrylate de méthyle) (ou PMMA) réticulé par du triacrylate de triméthylolpropane (ou TMPTA).

Lesdites particules solides sont, de préférence, des microparticules, c'est-à-dire qu'elles présentent une taille moyenne comprise entre 0,1 µm et 100 µm et, mieux encore, entre 5 µm et 50 µm.

Cette taille moyenne peut être déterminée par des mesures en microscopie optique, par exemple à l'aide d'un microscope optique tel que celui commercialisé par Fisher Scientific, sous la référence Fisherbrand^{™} AX-500.

À cet égard, on précise que l'on entend par « *taille »,* la plus grande des trois dimensions des microparticules.

Par ailleurs, il va de soi que le ou les indicateurs colorés sont choisis de manière à ce qu'ils présentent au moins un virage colorimétrique en présence du ou des composés chimiques que l'on souhaite détecter et sont choisis, de préférence, parmi ceux qui sont incolores et ceux qui présentent une couleur initiale - i.e. avant toute exposition à un ou plusieurs composés chimiques - de couleur claire, par exemple, dans les nuances de jaune pâle.

En particulier, lorsque plusieurs indicateurs colorés différents sont utilisés, ils sont avantageusement choisis de manière à ce qu'ils présentent au moins un virage colorimétrique contrasté les uns par rapport aux autres, de sorte à pouvoir discriminer les composés chimiques.

Avantageusement, autant d'indicateurs colorés différents sont utilisés que de composés chimiques à détecter.

Conformément à l'invention et selon le ou les composés chimiques que l'on souhaite détecter, le ou les indicateurs colorés peuvent être choisis parmi les composés anthraquinoniques, les composés azoïques, les composés triarylméthanes, les composés xanthéniques, les composés indigoïques, les complexes métalliques, les composés comprenant au moins un groupe stilbène, les composés coumariniques, les composés comprenant au moins un groupe quinoléine, les composés comprenant au moins un groupe cyanine, les composés comprenant au moins un groupe phtalocyanine et les composés comprenant au moins un groupe porphyrine.

À titre d'exemples de composés anthraquinoniques, il peut être fait mention de la 1,4-dihydroxyanthraquinone, la 1-aminoanthraquinone, l'acide carminique, la 1,5-diaminoanthraquinone, la 1,2-diaminoanthraquinone, la 1,4-diamino-5-nitroanthraquinone, la 1,4,5,8-tétraaminoanthraquinone (aussi appelée « *Disperse Blue 1* » en anglais), la 1-méthylamino-4-(2-hydroxyéthyl)aminoanthraquinone (aussi appelée *« Disperse Blue 3* » en anglais), la 1-amino-2-méthylanthraquinone (aussi appelée *« Disperse Orange 11* » en anglais) et le 1,4-bis-(p-tolylamino)anthraquinone (aussi appelé *« Solvent Green 3* » en anglais).

À titre d'exemples de composés azoïques, il peut être fait mention du 10-(2',4'-dinitrophénylazo)-9-phénanthrol, le 6-hydroxy-5-[(2-méthoxy-5-méthyl-4-sulfophényl)azo]-2-naphtalènesulfonate de disodium (aussi appelé « *Rouge Allura AC* »), le 4-diméthylaminoazobenzène (aussi appelé « *Jaune de méthyle* »), le 4-(2-carboxyphénylazo)-N,N-dipropylaniline (aussi appelé « *Propyl red* » en anglais), le chlorure de 3-(diéthylamino)-7-{(E)-[4-(diméthylamino)phényl]diazényl}-5-phénylphénazin-5-ium (aussi appelé « *Vert Janus B* »), le *N,N*-diméthyle-4,4'-azodianiline, le *N*-éthyl-1-((4-phényldiazényl)phényl)diazényl)naphtalène-2-amine (aussi appelé « *Rouge Soudan 7B* »), l'amarante, le dihydrochlorure de 4-[[3-[(2,4-diaminophényl)diazényl]phényl]diazényl]benzène-1,3-diamine (aussi appelé « *Brun de Bismarck Y* »), le 4-hydroxy-3-[(4-sulfo-1-naphtalényl)azo]-1-naphtalènesulfonate de disodium (aussi appelé « *Chromotrope FB* »), l'acide benzidinediazo-bis-1-naphtylamine-4-sulfonique (aussi appelé « *Rouge Congo* »), le 2,2'-[4-(4-aminophénylazo)phénylimino]diéthanol (aussi appelé « *Disperse Black 9* » en anglais), le 2,2'-[[4-[(4-nitrophényl)azo]phényl]imino]biséthanol (aussi appelé « *Disperse Red 19* » en anglais), le (4Z)-4-[(1-hydroxynaphthalène-2-yl-hydrazinylidène]-7-nitro-3-oxo Y-naphtalène-1-sulfonate de sodium (aussi appelé « *Noir ériochrome T* »), le 4'-(4-(diéthylamino)phénylazo)acétophénone, le 4-[(E)-(4-nitrophényl)diazényl]-N-phénylaniline (aussi appelé « *Disperse Orange 1* » en anglais), l'hélianthine (aussi appelée « *Méthylorange* »), la 4-(4-nitrophénylazo)aniline (aussi appelée « *Disperse Orange 3* » en anglais), le 4-[4-(phénylazo)-1-naphthylazo]phénol (aussi appelé « *Disperse Orange 13* » en anglais), le 3-[*N*-éthyle-4-(4-nitrophénylazo)phénylamino]propionitrile (aussi appelé *« Disperse Orange 25 »* en anglais), le 4-amino-5-hydroxy-3-(4-nitrophénylazo)-6-(phénylazo)naphtalène-2,7-disulfonate de sodium (aussi appelé « *Bleu noir naphtol* »), le (2,2-diméthyl-1,3-dihydropérimidine-6-yl)-(4-phénylazo-1-naphthyl)diazène (aussi appelé « *Sudan Black B* » en anglais), le 6-hydroxy-5-[(4-sulfonatophényl)azo]naphtalène-2-sulfonate de disodium (aussi appelé « *Jaune orangé S* »), la tartrazine, le bleu Evans, le 4-[4-(phénylazo)phénylazo]-o-crésol (aussi appelé «*Disperse Yellow 7*» en anglais) et le 4'-nitro-4-diméthylaminoazobenzène.

À titre d'exemples de composés triarylméthanes, il peut être fait mention du vert de bromocrésol, du bleu d'aniline diammonium, du bleu de bromophénol, le violet de m-crésol, le rouge de crésol, le violet de gentiane (aussi appelé « *Crystal Violet »* en anglais), le rouge de chlorophénol, le sel de sodium de l'hydroxyde de (4-(α-(p-(diéthylamino)phényl)-2,4-disulfobenzylidène)-2,5-cyclohexadiène-1-ylidène)diéthyl-ammonium (aussi appelé « *Patent blue V sodium salt* » en anglais), le bleu de méthyle, l'acide rosolique, le violet de pyrocatéchol, le vert brillant BS, la base pararosaniline, la fuchsine, le bleu de thymol et le 4-(diméthylamino)-α-[4-(diméthylamino)phényl]-α-phényl-benzèneméthanol.

À titre d'exemples de composés xanthéniques, il peut être fait mention du chlorure de [9-(2-carboxyphényl)-6-diéthylamino-3-xanthénylidène]-diéthylammonium (aussi appelé « *Rhodamine 610* »), la rhodamine 6G éventuellement sous forme de sel de perchlorate, la rhodamine B, la sulforhodamine 101 hydratée, la fluorescéinamine (en particulier isomère I) et le chlorure de rhodamine 110.

À titre d'exemples de composés indigoïques, il peut être fait mention de l'indigo.

À titre d'exemples de complexes métalliques, il peut être fait mention du 5-nitroso-6-oxidonaphthalène-2-sulfonate trisodique complexé par du fer(III) (aussi appelé *« Naphtol Green B* » en anglais).

À titre d'exemples de composés comprenant au moins un groupe quinoléine, il peut être fait mention de 2,4-bis[p-(diméthylamino)styryl]quinoléine.

À titre d'exemples de composés comprenant au moins un groupe stilbène, il peut être fait mention du colorant connu sous la terminologie anglaise « *Fluorescent Brightener* 28 ».

À titre d'exemples de composés coumariniques, il peut être fait mention de la 7-amino-4-(trifluorométhyl)coumarine, la 7-amino-4-méthylcoumarine, la 3-(2-N-méthylbenzimidazolyl)-7-N,N-diéthylaminocoumarine (aussi appelée « *Coumarin 30* » en anglais), la 2,3,6,7-tétrahydro-10-(3-pyridyl)-1H,5H,11H-[1]benzopyrano[6,7,8-ij]quinolizine-11-one (aussi appelée « *Coumarin 510* » en anglais), la 3-(2-Benzothiazolyl)-7-(diéthylamino)coumarine (aussi appelée « *Coumarin* 6 » en anglais).

À titre d'exemples de composés comprenant un groupe cyanine, il peut être fait mention du vert d'indocyanine, du perchlorate de 5,5'-dichloro-11-diphénylamino-3,3'-diéthyl-10,12-éthylènethiatricarbocyanine (aussi appelé « *IR140* »)*.*

À titre d'exemples de composés comprenant un groupe phtalocyanine, il peut être fait mention du chlorure de phtalocyanine de fer(III), d'acide phtalocyanine-4,4',4",4‴-tétrasulfonique de fer(III) et du 1,2,3,4,8,9,10,11,15,16,17,18,22,23,24,25-hexadécafluoro-29H,31H-phtalocyanine.

De préférence, la solution aqueuse moussante comprend au total de 0,1 % à 8 % en masse, de préférence de 0,9 % à 4 % en masse, de particules solides encapsulant un indicateur coloré, par rapport à la masse totale de ladite solution.

Par ailleurs, outre ce ou ces indicateurs colorés, la solution aqueuse moussante comprend plus spécifiquement :
- de l'eau,
- un ou plusieurs agents tensioactifs (ou dits surfactants), de préférence, de 0,05 % à 1,5 % en masse par rapport à la masse totale de la solution aqueuse moussante ; et éventuellement
- un ou plusieurs agents gélifiants (ou dits agents viscosants), de préférence, de 0,00 % à 0,8 % en masse par rapport à la masse totale de la solution aqueuse moussante.

À cet égard, on précise que, dans ce qui précède et ce qui suit, les expressions « *de* .... *à ....* » et « *comprise entre* .... *et* .... », signifient que les bornes sont incluses.

Par ailleurs, on entend par « *agents tensioactifs* », des agents tensioactifs organiques moussants, c'est-à-dire des agents tensioactifs comprenant une partie lipophile (apolaire) et une partie hydrophile (polaire) et présentant un équilibre hydrophile/lipophile (ou HLB pour « *Hydrophilic-Lipophilic Balance* » en anglais) compris entre 3 et 8. La valeur HLB d'un tel tensioactif peut facilement être obtenue par la méthode telle que décrite par J. T . Davies (dans « A quantitative kinetic theory of emulsion type I. Physical Chemistry of the emulsifying agent », Gas/Liquid and Liquid/Liquid Interfaces, Proceedings of 2nd International Congress Surface Activity 1957, 426-438, ci-après référence **[2])** et aux tables de HLB pour différents groupes chimiques, disponibles pour l'homme du métier.

Plus particulièrement, le ou les agents tensioactifs sont avantageusement choisis parmi les tensioactifs non ioniques, les tensioactifs anioniques, les tensioactifs cationiques, les tensioactifs amphotères et les tensioactifs de structure de type bolaforme ou gemini, de préférence les tensioactifs non ioniques, les tensioactifs anioniques et les tensioactifs cationiques et, mieux encore, les tensioactifs non ioniques.

Les tensioactifs non ioniques (ou dits neutres), sont des composés dont les propriétés tensioactives, notamment les propriétés hydrophiles, sont apportées par des groupements fonctionnels non chargés tels qu'un alcool, un éther, un ester ou encore un amide et peuvent contenir des hétéroatomes tels que l'azote ou l'oxygène. En raison de la faible contribution hydrophile de ces fonctions, les tensioactifs non ioniques sont le plus souvent polyfonctionnels.

Dans le cadre de la présente invention, les tensioactifs non ioniques peuvent notamment être choisis parmi les alcoxylates d'alkyles, les alcoxylates d'alcools gras, les alcoxylates d'amines grasses, les alcoxylates d'acides gras, les alcoxylates d'oxoalcools, les alcoxylates d'alkylphénols, les éthoxylates d'alkyles, les éthoxylates d'alcools gras, les éthoxylates d'amines grasses, les éthoxylates d'acides gras, les éthoxylates d'oxoalcools, les éthoxylates d'alkylphénols tels que les éthoxylates d'octylphénol et de nonylphénol, les alcools, les α-diols, les alkylphénols polyéthoxylés et poly-propoxylés ayant une chaîne carbonée, par exemple, C₈-C₁₈ et comprenant de 2 à 50 groupes d'oxydes d'éthylène ou d'oxydes de propylène, les polymères complexes d'oxydes de polyéthylène et de polypropylène, les copolymères d'oxyde d'éthylène et de propylène, les copolymères blocs d'oxydes de polyéthylène et de polypropylène tels que les copolymères triblocs POEPOP-POE, les condensats d'oxyde d'éthylène et de propylène sur des alcools gras, les amides gras polyéthoxylés ayant, de préférence, de 2 à 30 moles d'oxyde d'éthylène, les éthers polyéthoxylés ayant, de préférence, de 2 à 30 moles d'oxyde d'éthylène, les monoesters (monolaurate, monomyristate, monostéarate, monopalmitate, monooléate, etc) et polyesters d'acides gras et du glycérol, les amides gras polyglycérolés comprenant, en moyenne, de 1 à 5 et, plus particulièrement, de 1,5 à 4 groupes glycérol, les esters d'acide gras du sorbitan oxyéthylénés comprenant de préférence, de 2 à 30 moles d'oxyde d'éthylène, les monoesters (monolaurate, monomyristate, monostéarate, monopalmitate, monooléate, etc.) et polyesters d'acides gras et du sorbitane, les monoesters de polyoxyéthylène sorbitane, les esters d'acides gras du sucrose, les esters d'acides gras du polyéthylèneglycol, les alkylpolyglucosides, les dérivés de N-alkylglucamine et les oxydes d'amines tels que les oxydes d'alkylamines, par exemple, en C₁₀-C₁₄ et les oxydes de N-acylaminopropylmorpholine, les polyols et en particulier les alkylates de glucose tels que l'hexanoate de glucose, les tensioactifs dérivant de glucoside (laurate de sorbitol) et de polyols tels que les éthers d'alcools glycérolés, les alcanolamides et leurs mélanges.

Plus particulièrement, les tensioactifs non ioniques peuvent être choisis parmi ceux décrits dans la demande internationale WO 2004/008463, ci-après référence [3], et notamment parmi ceux appartenant aux familles des alkylpolyglucosides ou des alkylpolyétherglucosides, dérivés du glucose et biodégradables, tels que ceux commercialisés par la société BASF sous les références commerciales Glucopon^{™} (Glucopon^{™} 215 par exemple) ou par la société SEPPIC sous les références commerciales Oramix^{™} (Oramix^{™} CG-110 par exemple).

Les tensioactifs anioniques sont, quant à eux, des tensioactifs dont la partie hydrophile est chargée négativement. Ils peuvent être choisis parmi les esters d'acide sulfurique, les esters d'acide phosphorique, les alkyles ou aryles sulfonates, les alkyles ou aryles sulfates, les alkyles ou aryles phosphates, les alkyles ou aryles sulfosuccinates et les alkyles et aryles sarcosinates associés à un contre ion tel qu'un ion ammonium, un ammonium quaternaire tel que le tétraéthylammonium ou le tétrabutylammonium et les cations tels que Na⁺, Li⁺, Ca²⁺, Mg²⁺, Zn²⁺ et K⁺.

Plus particulièrement, les tensioactifs anioniques peuvent être choisis parmi le paratoluènesulfonate de tétraéthylammonium, le dodécylsulfate de sodium (ou SDS), le laurylsarcosinate de sodium (ou sarcosyl), le palmitate de sodium, le stéarate de sodium, le myristate de sodium, le di(2-éthylhexyl) sulfosuccinate de sodium, le méthylbenzène sulfonate et l'éthylbenzène sulfonate.

Les tensioactifs cationiques, quant à eux, présentent typiquement au moins une chaîne hydrocarbonée et une tête polaire et sa partie hydrophile est chargée positivement. Ils peuvent être choisis parmi les ammoniums quaternaires comprenant au moins une chaîne aliphatique en C₄-C₂₂ associés à un contre-ion anionique choisi notamment parmi les dérivés du bore tels que le tétrafluoroborate et les ions halogénures tels que F⁻, Br⁻, I⁻ ou Cl⁻.

Plus particulièrement, les tensioactifs cationiques peuvent être choisis parmi le chlorure de tétrabutylammonium, le chlorure de tétradécylammonium, le bromure de tétradécyltriméthyle ammonium (TTAB), les halogénures d'alkylpyridinium portant une chaîne aliphatique et les halogénures d'alkylammonium.

D'autre part, lorsque la solution aqueuse moussante comprend un ou plusieurs agents gélifiants, il va de soi que leur pourcentage massique dans cette solution est strictement supérieur à 0,00 et, dans ce cas, ladite solution est dite *« solution aqueuse moussante viscosée ».* Dans le cas contraire, la solution aqueuse moussante est dite *« solution aqueuse moussante non viscosée* », auquel cas les particules solides encapsulant un indicateur coloré permettent de stabiliser la mousse, c'est-à-dire que le drainage (ou l'assèchement) de cette mousse est ralentit.

Ces agents gélifiants sont, avantageusement, des agents biodégradables et pseudo-plastiques. De préférence, ils sont choisis parmi les polymères hydrosolubles, les hydrocolloïdes, les hétéropolysaccharides tels que les polymères polyglucosidiques à chaînes ramifiées trisaccharidiques, les dérivés cellulosiques et les polysaccharides tels que les polysaccharides comprenant du glucose comme seul monomère.

Plus particulièrement, le ou les agents gélifiants utilisables dans le cadre de la présente invention sont choisis parmi la gomme de xanthane, la gomme de guar, l'agar-agar, le carraghénane, l'alginate de sodium, le caséinate, la gélatine, la pectine, l'amidon, la cellulose, la 2-hydroxyéthylcellulose (HEC) et le chitosan, préférence étant donnée à la gomme de xanthane.

Une mousse utilisable dans le cadre de l'invention peut, par exemple, être obtenue à partir d'une solution aqueuse moussante comprenant l'un au moins des indicateurs colorés mentionnés ci-dessus et, plus spécifiquement, le vert de bromocrésol, le Disperse Black 9 et/ou la 2,4-bis[p-(diméthylamino)styryl]quinoléine, un alkylpolyglucoside et, éventuellement, de la gomme de xanthane.

Il est à noter que la solution aqueuse moussante peut être neutre, acide ou basique en fonction du ou des indicateurs colorés qu'elle comprend et en fonction des conditions de pH requises pour une bonne efficacité de ce ou ces indicateurs colorés. Un homme du métier saura parfaitement déterminer le pH le plus adapté pour cette solution.

Quoi qu'il en soit, de par la composition de la solution aqueuse moussante, les mousses constitutives du dispositif de l'invention présentent les avantages des mousses à durée de vie contrôlée et augmentée et sont aptes à être déposées sur tout type de surfaces (par exemple, verticales ou horizontales) et à assurer un contact prolongé pendant une durée suffisante pour laisser le ou les indicateurs colorés réagir, le cas échéant, avec le ou les composés chimiques présents sur lesdites surfaces et ainsi révéler la présence de ces composés.

En particulier, pour les surfaces verticales, les mousses glissent lentement par gravité mais tiennent suffisamment longtemps sur ces surfaces pour permettre à ou aux indicateurs colorés de réagir avec le ou les composés chimiques à détecter.

Par ailleurs, la présente invention permet de localiser visuellement (i.e. à œil nu), rapidement et précisément la ou les tâches de contamination par le ou les composés chimiques et, ce, notamment grâce à ou aux indicateurs colorés qui présentent l'avantage de ne pas diffuser dans la mousse. Autrement dit, lorsqu'un ou plusieurs composés chimiques sont présents sur une surface, alors un ou plusieurs changements de couleurs sont observés au sein de la mousse mais uniquement au niveau des endroits contaminés par le ou les composés chimiques et aucun autre changement de couleur n'est observé dans le reste de la mousse, ce qui permettra de mieux adapter une éventuelle étape de décontamination suivant cette détection.

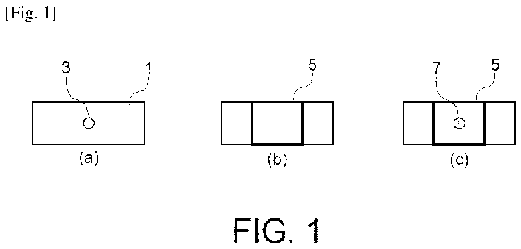

Ce principe de détection est représenté sur la figure 1 jointe en annexe avec :
- pour la partie (a), la surface d'une plaque 1 sur laquelle est déposée une goutte 3 d'un composé chimique dont on souhaite détecter la présence ;
- pour la partie (b), la surface de ladite plaque revêtue par une couche de mousse 5 constitutive du dispositif de l'invention et comprenant un ou plusieurs indicateurs colorés différents aptes à détecter le composé chimique ; et
- pour la partie (c), la surface de ladite plaque revêtue par la couche de mousse 5 après réaction de l'indicateur coloré avec la goutte de composé chimique sous-jacente, le changement de couleur étant uniquement localisé sous forme d'une tâche de couleur 7 située en regard de la goutte de composé chimique sous-jacente.

De plus, de par la composition de la solution aqueuse moussante, les mousses constitutives du dispositif de l'invention présentent également l'avantage de ne générer que très peu de déchets puisqu'un faible volume d'effluents liquides sera produit (entre 5 % et 20 % d'effluents liquides par rapport à une solution de décontamination liquide « classique » qui génèrera 100 % d'effluents liquides).

De plus, le dispositif de détection colorimétrique conforme à l'invention est particulièrement adapté pour la détection et, le cas échéant, la discrimination de composés chimiques qu'ils soient liquides ou solides.

Conformément à l'invention, ces composés chimiques peuvent être des composés toxiques, tels que des composés toxiques de guerre ou des composés toxiques industriels chimiques (TIC).

Plus particulièrement, les composés toxiques de guerres peuvent être des composés organophosphorés de la série G (comme le sarin ou le soman), des composés organophosphorés de la série V (comme le composé VX), d'autres composés organophosphorés, des composés vésicants (comme l'ypérite soufrée, notée HD ou encore la lewisite, notée L1) et/ou des composés arséniés.

Les composés toxiques industriels, quant à eux, peuvent être du chlore, de l'ammoniac, du disulfure de carbone, de l'acide cyanhydrique, de l'acide nitrique, de l'acide sulfurique et/ou du formaldéhyde.

L'invention a-t-elle aussi, en deuxième lieu, pour objet un procédé de préparation du dispositif tel que défini ci-dessus, comprenant les étapes successives suivantes :
a) une étape de préparation des particules solides encapsulant un indicateur coloré ;
b) une étape de préparation de la solution aqueuse moussante en mélangeant les particules solides obtenues à l'issue de l'étape a), avec de l'eau, un ou plusieurs agents tensioactifs et, éventuellement, un ou plusieurs agents gélifiants ; puis
c) une étape de génération de la mousse à partir de la solution aqueuse moussante obtenue à l'issue de l'étape b).

Il va de soi que plusieurs indicateurs colorés différents peuvent être utilisés, auquel cas l'étape a) est mise en œuvre plusieurs fois pour chacun de ces indicateurs colorés.

Par ailleurs, les particules solides, le ou les indicateurs colorés, le ou les agents tensioactifs et le ou les agents gélifiants sont tels que décrits précédemment.

Conformément à l'invention, les particules solides, l'eau, le ou les agents tensioactifs et éventuellement le ou les agents gélifiants sont mélangés, lors de l'étape b), de manière à ce que la solution aqueuse moussante résultante comprenne :
- de 0,1 % à 8 % en masse, de préférence de 0,9 % à 4 % en masse, de particules solides encapsulant un indicateur coloré, par rapport à la masse totale de ladite solution ;
- de 0,05 % à 1,5 % en masse d'agent(s) tensioactif(s) par rapport à la masse totale de ladite solution ; et
- de 0,00 % à 0,8 % en masse d'agent(s) gélifiant(s) par rapport à la masse totale de ladite solution.

L'étape c) du procédé de préparation peut être réalisée par tout dispositif de génération de mousse décrit dans l'art antérieur et connu de l'homme du métier. Plus particulièrement, il s'agit de dispositifs assurant le mélange gaz-liquide, notamment par agitation mécanique, par barbotage, par mélangeur statique comprenant ou non des billes, par générateur de mousse à tube à microbilles, par des dispositifs tels que décrits dans la demande internationale WO 02/043847, ci-après référence **[4],** ou encore par tout autre dispositif, notamment les systèmes à buses ou venturi permettant des débits importants (généralement compris entre 1 et 1000 m³/h). L'utilisation d'un générateur de mousse trouve notamment son intérêt dans le fait de limiter la distance entre l'opérateur et la surface éventuellement contaminée.

La présente invention concerne aussi l'utilisation d'un dispositif tel que précédemment défini pour détecter la présence d'un ou de plusieurs composés chimiques susceptibles d'être présents sur une surface.

L'invention a donc, en troisième lieu, pour objet un procédé de détection de la présence d'au moins un composé chimique sur une surface susceptible de comprendre ce composé, lequel procédé comprend les étapes successives suivantes :
- une étape de mise en contact du dispositif de détection colorimétrique tel que défini précédemment avec ladite surface ; puis
- une étape de déduction de la présence du composé chimique sur ladite surface en fonction d'un éventuel virage colorimétrique.

Conformément à l'invention, l'étape de mise en contact peut consister à appliquer la mousse sur la surface par pulvérisation, auquel cas la mousse est générée au moment de la mise en contact, ou par talochage (i.e. étalement par couche), auquel cas la mousse est générée préalablement à la mise en contact.

De préférence, la mousse pulvérisée ou étalée présente une épaisseur comprise entre 0,5 cm et 5 cm et, mieux encore, entre 0,5 cm et 2 cm.

Entre l'étape de mise en contact et l'étape de déduction, il peut être prévu un temps d'attente pour que, le cas échéant, le ou les changements de couleurs puissent avoir lieu.

Pour l'étape de déduction, l'opérateur pourra se baser sur une échelle colorimétrique associée au dispositif de détection colorimétrique qui définira, pour tous les composés chimiques susceptibles d'être détectés par ce dispositif, le virage colorimétrique correspondant, cette échelle colorimétrique pouvant être déterminée par des essais préalables pour chacun des dispositifs et pour chacun des composés chimiques destinés à être détectés.

La déduction peut donc se faire aisément à l'œil nu dès observation d'un changement de couleur.

Par ailleurs, le procédé de détection selon l'invention s'applique à tout type de surface quelle que soit sa géométrie. Par exemple, ladite surface peut être simple, telle qu'une surface plane, ou alors elle peut être complexe, telle qu'une surface rugueuse ou présentant des cavités non obstruées et, ce, quel que soit le matériau constituant cette surface.

Conformément à l'invention, la surface susceptible de comprendre le ou les composés chimiques à détecter peut être en un métal, tel que l'aluminium, en un alliage métallique, tel que de l'acier, de l'acier inoxydable ou du fer-blanc, en silicium, en verre comprenant généralement des silicates, en verre de silice, en céramique, en brique, en porcelaine, en ciment, en béton, en asphalte, en pierre, en granit, en bois, en terre, en plastique ou en une quelconque de leurs associations.

De plus, la surface susceptible de comprendre le ou les composés chimiques à détecter peut présenter une taille, une forme et une orientation quelconques. Il peut s'agir de grandes surfaces telles qu'une route ou un mur, un plafond et/ou un sol d'une grande infrastructure comme un immeuble, un hôtel, un aéroport ou encore un transport en commun. Il peut également s'agir de surfaces de taille intermédiaire telles que des surfaces d'objets industriels comme une machine utilisée dans l'agro-alimentaire, un véhicule, un aéronef, une cuve, une cuisine de restaurant, une chambre froide, un sanitaire ou un conteneur, ou encore, il peut s'agir de surfaces de petite taille telles que des surfaces de dispositifs médicaux ou d'armes.

Conformément à l'invention, les composés chimiques susceptibles d'être détectés par le procédé de l'invention peuvent être des composés toxiques, tels que des composés toxiques de guerre ou des composés dits TIC.

Les composés toxiques de guerres peuvent être des composés organophosphorés de la série G (comme le sarin ou le soman), des composés organophosphorés de la série V (comme le composé VX), d'autres composés organophosphorés, des composés vésicants (comme l'ypérite soufrée, notée HD ou encore la lewisite, notée L1) et/ou des composés arséniés.

Les composés toxiques industriels, quant à eux, peuvent être du chlore, de l'ammoniac, du disulfure de carbone, de l'acide cyanhydrique, de l'acide nitrique, de l'acide sulfurique ou du formaldéhyde.

Par ailleurs, après l'étape de déduction, une étape supplémentaire consistant à récupérer la mousse ou les résidus de cette mousse peut être mise en œuvre, par exemple, par aspiration et/ou par essuyage (notamment aux moyens d'une lingette ou d'une éponge) après séchage de la mousse.

Dans le cas où il est reste encore de la mousse, c'est-à-dire avant séchage complet de celle-ci, c'est cette mousse qui est récupérée. Par contre, dans le cas où la phase liquide de la mousse s'est totalement évaporée - i.e. séchage complet -, seuls des résidus secs sont présents sur la surface ayant été mise en contact avec la mousse et ce sont donc ces résidus qui sont récupérés.

Dans le cas où un ou plusieurs changements de couleurs sont observés (i.e. après déduction de la présence d'un ou de plusieurs composés chimiques), une étape de décontamination de la surface pourra facilement et rapidement être mise en œuvre et, ce, notamment grâce à la discrimination du ou des composés chimiques détectés.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES FIGURES

La figure 1, déjà commentée, illustre le principe général de détection conforme à l'invention.

### EXPOSÉ DÉTAILLÉ DE MODES DE MISE EN ŒUVRE PARTICULIERS

### 1. Encapsulation de différents indicateurs colorés

### 1.1 Encapsulation du vert de bromocrésol dans des particules solides de PMMA/TMPTA

L'encapsulation du vert de bromocrésol dans des particules de PMMA/TMPTA (c'est-à-dire de poly(méthacrylate de méthyle) réticulé par du triacrylate de triméthylolpropane) est réalisée selon le protocole suivant :
1°) 5 mg de vert de bromocrésol préalablement broyé et 50 mg de photoamorceur Irgacure^{™} 819 (fourni par BASF avec la référence commerciale 56415892) sont mis en suspension dans 20 mL de cyclohexane puis passés aux ultrasons ;
2°) la suspension ainsi obtenue est placée sous agitation magnétique dans une cuve UV (fournie par Hönle, sous la référence *UVA-cube100 ; 365 nm ; ~4 mW*/*cm²*) ;
3°) toujours sous agitation, une solution comprenant 0,2 mL de MMA et 0,8 mL de TMPTA est introduite dans la suspension à l'aide d'une seringue ;
4°) la suspension obtenue à l'issue du point 3°) est irradiée sous UV pendant 4 minutes ; elle passe alors d'un aspect transparent à un aspect laiteux ;
5°) du cyclohexane est ensuite ajouté pour éliminer le photoamorceur résiduel ;
6°) la suspension est ensuite centrifugée à 10 000 rpm pendant 5 minutes puis le cyclohexane est retiré et remplacé par de l'éthanol ;
7°) la suspension est une nouvelle fois centrifugée à 10 000 rpm pendant 5 minutes pour éliminer, cette fois-ci, le vert de bromocrésol résiduel non encapsulé ; et enfin,
8°) les particules ainsi obtenues dans la suspension sont récupérées par filtration sur un filtre plissé, rincées à l'eau et séchées à température ambiante.

### 1.2 Encapsulation du Disperse Black 9 dans des particules solides de

### PMMA/TMPTA

Le même protocole que celui décrit au point 1.1 ci-dessus est mis en œuvre, en utilisant cette fois-ci du Disperse Black 9 comme indicateur coloré, en lieu et place du vert de bromocrésol.

### 1.3 Encapsulation de la 2,4-bis[p-(diméthylamino)styryl]quinoléine dans des particules solides de PMMA/TMPTA

Le même protocole que celui décrit au point 1.1 ci-dessus est mis en œuvre, en utilisant cette fois-ci de la 2,4-bis[p-(diméthylamino)styryl]quinoléine comme indicateur coloré, en lieu et place du vert de bromocrésol.

### 2. Préparation de deux mousses différentes (M1 et M2)

Deux mousses conformes à l'invention sont préparées : une première (mousse M1) à partir d'une solution aqueuse moussante viscosée et une deuxième (mousse M2) à partir d'une solution aqueuse moussante non viscosée. La composition qualitative et quantitative des solutions aqueuses à partir desquelles les mousses M1 et M2 sont préparées est indiquée dans le tableau I suivant :

**Tableau I**

| | **Agent tensioactif** | **Agent gélifiant** | **Indicateurs colorés** |
|---|---|---|---|
| **Mousse M1** | Glucopon^{™} : 20 g/L | Gomme de xanthane : 6 g/L | Vert de bromocrésol encapsulé : 18 g/L ; |
| | | | Disperse Black 9 encapsulé : 18 g/L |
| **Mousse M2** | Glucopon^{™} : 14 g/L | - | Vert de bromocrésol encapsulé : 18 g/L ; |
| | | | Disperse Black 9 encapsulé : 18 g/L |

Le Glucopon^{™} utilisé dans les exemples correspond à celui commercialisé par la société BASF, sous la référence commerciale Glucopon^{™} 215 UP et la gomme de xanthane correspond à celle commercialisée par la société Sigma-Aldrich, sous la référence commerciale Xanthane G1253.

Les mousses M1 et M2 sont chacune préparées à partir de :
- 50% en volume d'une solution aqueuse d'acide nitrique à 65 %, ayant un pH de 3 et comprenant les indicateurs colorés encapsulés selon les quantités mentionnées dans le tableau I ; la solution résultante est agitée pour disperser les indicateurs colorés encapsulés ; et
- 50% en volume d'une solution comprenant le Glucopon^{™} et, éventuellement, la gomme de xanthane, selon les quantités mentionnées dans le tableau I.

Les solutions aqueuses moussantes ainsi obtenues sont de couleur jaune et ont un pH de 4. Elles sont ensuite agitées à l'aide d'une pale jusqu'à l'obtention des mousses M1 et M2 qui présentent une coloration jaune pâle.

### 3. Utilisation des mousses M1 et M2 pour détecter des composés simulant des composés toxiques sur un support horizontal

### 3.1 Utilisation des mousses M1 et M2 pour détecter du DPCP

Les mousses M1 et M2 obtenues au point 2 ci-avant sont chacune étalées sous la forme d'une couche d'environ 5 mm sur un support en aluminium placé à l'horizontal et sur lequel des gouttes de diphénylchlorophosphate (DPCP) ont préalablement été déposées.

Un changement de couleur a été observé à partir de 25 minutes (pour M1) et de 30 minutes (pour M2) qui s'intensifie en fonction du temps, jusqu'à l'obtention d'une couleur violette au bout de 70 minutes (pour M1) et 40 minutes (pour M2), ce changement de couleur étant observé uniquement au niveau des endroits où se situent les gouttes de DPCP sous-jacentes.

Par ailleurs, pour la mousse M2, il a été observé que celle-ci sèche plus rapidement que la mousse M1 et, qu'au bout d'une heure et 30 minutes, seules des particules sont présentes sur le support en aluminium, ces particules ayant une coloration violette au niveau des endroits où se situent les gouttes de DPCP sous-jacentes tandis que le reste des particules est incolore.

### 3.2 Utilisation des mousses M1 et M2 pour détecter du NaOH

Le même essai que le point 3.1 ci-avant a été réalisé mais en mettant en œuvre, cette fois-ci, des supports en aluminium sur lesquels des gouttes de NaOH à 0,1 mol/L ont préalablement été déposées, en lieu et place du DPCP.

Un changement de couleur a été observé à partir de 25 minutes (pour M1) et de 10 minutes (pour M2) qui s'intensifie en fonction du temps, jusqu'à l'obtention d'une couleur bleue/verte au bout de 70 minutes (pour M1) et 30 minutes (pour M2), ce changement de couleur étant, là encore, localisé uniquement au niveau des endroits où se situent les gouttes de NaOH sous-jacentes.

### 4. Utilisation des mousses M1 et M2 pour détecter des composés simulant des composés toxiques sur un support vertical

Les mousses M1 et M2 sont respectivement étalées sous la forme d'une couche d'environ 5 mm sur des supports en aluminium comprenant soit des gouttes de DPCP soit des gouttes de NaOH à 0,1 mol/L, lesquels supports sont ensuite placés sous sorbonne et à la verticale.

Les mousses glissent par gravité mais les propriétés de retard de drainage spécifiques à celles-ci leur permettent de rester en contact avec le DPCP et le NaOH suffisamment longtemps pour observer un changement de couleur, ce qui atteste donc l'efficacité de ces mousses même sur un support vertical.

### 5. Utilisation de la mousse M1 pour détecter du NaOH sous la forme solide

Un support en aluminium comprenant des gouttes de NaOH à 0,1 mol/L est placé sous sorbonne. Lorsque le dépôt du NaOH est sec, la mousse M1 est appliquée de la même façon que dans les essais précédents (cf. points 3 et 4).

Après 25 minutes, il a été observé un changement de couleur de la mousse au niveau des dépôts du NaOH, confirmant ainsi la possibilité de détecter des composés chimiques, qu'ils soient sous forme liquide ou solide.

### 6. Utilisation de différentes mousses pour détecter des composés toxiques de guerre

Dans cet essai, quatre mousses différentes (M3 à M6) sont préparées à partir de solutions aqueuses moussantes viscosées selon les compositions spécifiques du tableau Il suivant :

**Tableau Il**

| | **Agent tensioactif** | **Agent gélifiant** | **Indicateurs colorés** |
|---|---|---|---|
| **Mousse M3** | Glucopon^{™} : 10 g/L | Gomme de xanthane : 3 g/L | Vert de bromocrésol encapsulé : 37 g/L |
| **Mousse M4** | Glucopon^{™} : 10 g/L | Gomme de xanthane : 3 g/L | Disperse Black 9 encapsulé : 37 g/L |
| **Mousse M5** | Glucopon^{™} : 10 g/L | Gomme de xanthane : 3 g/L | 2,4-bis[p-(diméthylamino)styryl]quinoléine encapsulé : 37 g/L |
| **Mousse M6** | Glucopon^{™} : 10 g/L | Gomme de xanthane : 3 g/L | Vert de bromocrésol encapsulé : 12,3 g/L ; |
| | | | Disperse Black 9 encapsulé : 12,3 g/L |
| | | | 2,4-bis[p-(diméthylamino)styryl]quinoléine encapsulé: 12,3 g/L |

Dans chacune des solutions aqueuses moussantes, de l'acide sulfurique à 1 mol/L est ajouté jusqu'à l'obtention d'un pH égal à 4.

Les solutions aqueuses moussantes sont ensuite agitées à l'aide d'une pale jusqu'à l'obtention des mousses M3 à M6 qui présentent toutes une coloration jaune pâle.

Chaque mousse est mise en contact avec chacun des composés toxiques de guerre suivants : Soman, composé VX, composé HD et composé L1.

Les changements de couleurs observés sont indiqués dans le tableau III suivant :

**Tableau III**

| | **Soman** | **VX** | **HD** | **L1** |
|---|---|---|---|---|
| **Mousse M3** | - | Bleu | - | - |
| **Mousse M4** | Orange | Jaune plus foncé | Violet (légère coloration) | Violet |
| **Mousse M5** | - | - | - | - |
| **Mousse M6** | Orange | Vert | Violet (légère coloration) | Violet |

Il en résulte que :
- la mousse M3 permet de détecter le composé VX ;
- la mousse M4 permet de détecter le Soman, le composé VX, le composé HD et le composé L1 ; et
- la mousse M6 permet de détecter le Soman, le composé VX, le composé HD et le composé L1.

### RÉFÉRENCES CITÉES

**[1]** EP 2 069 522-B1 ;
**[2]** « A quantitative kinetic theory of emulsion type I. Physical Chemistry of the emulsifying agent », Gas/Liquid and Liquid/Liquid Interfaces, Proceedings of 2nd International Congress Surface Activity 1957, 426-438
[3] WO-A-2004/008463
**[4]** WO-A-02/043847

## Revendications

1. Dispositif de détection colorimétrique pour détecter la présence d'au moins un composé chimique, qui se présente sous la forme d'une mousse et qui consiste en une dispersion de bulles gazeuses dans une solution aqueuse moussante comprenant un ou plusieurs indicateurs colorés différents, **caractérisé en ce que** l'indicateur coloré ou chacun des indicateurs colorés est encapsulé dans des particules solides, et **en ce que** chaque particule solide ne comprend qu'un seul indicateur coloré lorsque la solution aqueuse moussante comprend plusieurs indicateurs colorés.

2. Dispositif selon la revendication 1, dans lequel les particules solides sont en un (co)polymère.

3. Dispositif selon la revendication 2, dans lequel le (co)polymère est issue de la (co)polymérisation d'au moins un monomère acrylate tel que le méthacrylate de méthyle, le triacrylate de triméthylolpropane, le penta-acrylate de dipentaérythritol et l'hexa-acrylate de dipentaérythritol.

4. Dispositif selon la revendication 2, dans lequel le (co)polymère est un poly(méthacrylate de méthyle) réticulé par du triacrylate de triméthylolpropane

5. Dispositif selon l'une quelconque des revendications 1 à 4, dans lequel le ou les indicateurs colorés sont choisis parmi les composés anthraquinoniques, les composés azoïques, les composés triarylméthanes, les composés xanthéniques, les composés indigoïques, les complexes métalliques, les composés comprenant au moins un groupe quinoléine, les composés comprenant au moins un groupe stilbène, les composés coumariniques, les composés comprenant au moins un groupe cyanine, les composés comprenant au moins un groupe phtalocyanine et les composés comprenant au moins un groupe porphyrine.

6. Dispositif selon l'une quelconque des revendications 1 à 5, dans lequel la solution aqueuse moussante comprend au total de 0,1 % à 8 % en masse, de préférence de 0,9 % à 4 % en masse, de particules solides encapsulant un indicateur coloré, par rapport à la masse totale de ladite solution.

7. Dispositif selon l'une quelconque des revendications 1 à 6, dans lequel la solution aqueuse moussante comprend un ou plusieurs agents tensioactifs et, éventuellement, un ou plusieurs agents gélifiants.

8. Dispositif selon la revendication 7, dans lequel la solution aqueuse moussante comprend de 0,05 % à 1,5 % en masse d'agent(s) tensioactif(s) et de 0,00 % à 0,8 % en masse d'agent(s) gélifiant(s) par rapport à la masse totale de ladite solution.

9. Dispositif selon la revendication 7 ou la revendication 8, dans lequel le ou les agents tensioactifs sont choisis parmi les tensioactifs non ioniques, les tensioactifs anioniques et les tensioactifs cationiques, de préférence les tensioactifs non ioniques.

10. Dispositif selon l'une quelconque des revendications 7 à 9, dans lequel le ou les agents gélifiants sont choisis parmi les polymères hydrosolubles, les hydrocolloïdes, les hétéropolysaccharides, les dérivés cellulosiques et les polysaccharides.

11. Procédé de préparation du dispositif selon l'une quelconque des revendications 1 à 10, comprenant les étapes successives suivantes :
a) une étape de préparation des particules solides encapsulant un indicateur coloré ;
b) une étape de préparation de la solution aqueuse moussante en mélangeant les particules solides obtenues à l'issue de l'étape a), avec de l'eau, un ou plusieurs agents tensioactifs et, éventuellement, un ou plusieurs agents gélifiants ; puis
c) une étape de génération de la mousse à partir de la solution aqueuse moussante obtenue à l'issue de l'étape b).

12. Procédé de détection de la présence d'au moins un composé chimique sur une surface susceptible de comprendre ce composé, comprenant les étapes successives suivantes :
- une étape de mise en contact du dispositif selon l'une quelconque des revendications 1 à 10 avec ladite surface ; puis
- une étape de déduction de la présence du composé chimique sur ladite surface en fonction d'un éventuel virage colorimétrique.

13. Dispositif selon l'une quelconque des revendications 1 à 10 et procédé selon la revendication 12, dans lesquels le ou les composés chimiques sont des composés toxiques de guerre et/ou des composés toxiques industriels.
